# EUROPEAN PATENT SPECIFICATION

(11) **EP 4 464 998 B1**
(45) Date of publication and mention of the grant of the patent: **26.02.2025**
(21) Application number: 23204761.3
(22) Date of filing: 20.10.2023
(51) Int. Cl.: G01K 1/143, G01K 13/00

(54) **TEMPERATURE MEASUREMENT ASSEMBLY AND COOKING APPARATUS**
TEMPERATURMESSANORDNUNG UND KOCHVORRICHTUNG
ENSEMBLE DE MESURE DE TEMPÉRATURE ET APPAREIL DE CUISSON

(30) Priority: 18.05.2023 CN 202321202467 U; 18.05.2023 CN 202321202481 U
(43) Date of publication of application: 20.11.2024
(73) Proprietor: Foshan Shunde Midea Electrical Heating Appliances Manufacturing Co., Limited, Foshan, Guangdong 528311 (CN)
(72) Inventor: Li, Xiaohui, Guangdong, 528311 (CN); Leng, Fenyong, Guangdong, 528311 (CN); Lu, Weijie, Guangdong, 528311 (CN); Zeng, Xianguang, Guangdong, 528311 (CN); Zeng, Yongjian, Guangdong, 528311 (CN); He, Shaohua, Guangdong, 528311 (CN); Su, Chang, Guangdong, 528311 (CN); Zhou, Yujie, Guangdong, 528311 (CN); Chen, Jinsen, Guangdong, 528311 (CN)
(74) Representative: RGTH

(56) References cited:
- US-A1- 2009 010 302
- US-A1- 2014 158 678
- US-B2- 8 231 269

## Description

### FIELD

The present disclosure relates to the technical field of temperature measurement devices, and particularly relates to a temperature measurement assembly and a cooking apparatus.

### BACKGROUND

In order to measure the temperature of a cooking apparatus in the related art, a single-point temperature measurement method is generally used. After a pot is partially heated, a detection position is not exactly an actual heating region, and accordingly, the measured temperature is not accurate. US 2009/0010302 A1 discloses a method for identifying a temperature sensor of a heating device. US 2014/0158678 A1 relates to a method for determining and regulating the temperature of an article with inductive properties which is heated inductively by means of an induction device. US 8,231,269 B2 describes a culinary article having a bottom in which heat-sensitive means made of electrically conductive materials are placed.

### SUMMARY

The present disclosure aims to solve at least one of the technical problems in the prior art or the related art.

In view of this, an embodiment of a first aspect of the present disclosure provides a temperature measurement assembly.

An embodiment of a second aspect of the present disclosure provides a cooking apparatus.

In order to realize the above objective, an embodiment of a first aspect of the present disclosure provides a temperature measurement assembly. The temperature measurement assembly comprises: a bearing plate, where a first side of the bearing plate is provided with a bearing region; a heat-conducting sheet arranged on a second side of the bearing plate, where the heat-conducting sheet is attached to the bearing plate; a heating coil arranged on a side of the heat-conducting sheet away from the bearing plate, where the heating coil is provided with a plurality of positioning grooves; and a plurality of temperature-sensing members arranged on the second side of the bearing plate, where an end of each temperature-sensing member abuts against the heat-conducting sheet; where the heat-conducting sheet is provided with a plurality of positioning columns extending in a thickness direction of the bearing plate, and an assembly of the heat-conducting sheet and the heating coil is achieved by a matching of the positioning columns and the positioning grooves,.

The temperature measurement assembly provided in the present disclosure mainly comprises the bearing plate, the heat-conducting sheet, the heating coil and the temperature-sensing members, and the bearing plate is configured to bear a cooking utensil. The heat-conducting sheet is arranged on a side of the bearing plate, in an embodiment a side away from the cooking utensil, that is, an outer surface of the bearing plate is configured to bear the cooking utensil, and a side of an inner surface of the bearing plate is provided with the heat-conducting sheet and heat can be transferred to the temperature-sensing members by the heat-conducting sheet. Finally, the temperature-sensing members can conveniently measure temperatures of heat-conducting sheets at different positions and a temperature in a specific region on the first side of the bearing plate can be measured. Particularly, in the present disclosure, the temperature-sensing members are arranged on a lower side of the heat-conducting sheet, and the temperature-sensing members abut against the heat-conducting sheet and a temperature of the bearing region can be measured. It should be emphasized that in the present disclosure, the heat of the bearing plate can be transferred to the temperature-sensing members by the heat-conducting sheet and a temperature can be conveniently measured. Moreover, the heat-conducting sheet is attached to the bearing plate and accuracy of temperature measurement can be improved.

It should be emphasized that the heating coil is further arranged on the lower side of the heat-conducting sheet, and the heating coil is provided with positioning grooves. When the heat-conducting sheet is mounted, positioning columns on the heat-conducting sheet match the positioning grooves on the heating coil, the positioning columns extend in the thickness direction, and the positioning columns extend into the positioning grooves, and the heat-conducting sheet is mounted on the heating coil. Since the temperature-sensing members are arranged in mounting holes of the heating coil, the heat-conducting sheet, the heating coil and the temperature-sensing members form a whole, and modular replacement and mounting requirements can be satisfied.

Further, the bearing plate is arranged at a top of the entire temperature measurement assembly, and the first side is configured to bear the cooking utensil. When local dry burning may occur during operation, the heat is transferred to the temperature-sensing members by the heat-conducting sheet located on the second side of the bearing plate. A temperature of a specific position can be measured according to an abutting positional relation between the temperature-sensing members and the heat-conducting sheet. Therefore, a temperature of each portion of a bottom of a pot can be accurately measured and cooking experience can be ensured. Further, operation of the product can be controlled according to a specific temperature change and a face plate can be effectively protected.

It can be understood that by the plurality of temperature-sensing members, a temperature of a specific region on the bearing plate can be accurately and rapidly measured and a control plate can subsequently conveniently measure temperatures in different temperature measurement regions, to control the temperatures.

The cooking utensil on the bearing plate can be heated under the action of the heating coil.

The first side, which is generally an upper surface, of the bearing plate is provided with the bearing region. That is, the cooking utensil can only be placed on a designated bearing region and a better cooking effect can be achieved.

In the above embodiment, the temperature measurement assembly further comprises: a plurality of mounting holes provided on the heating coil; where the plurality of temperature-sensing members are disposed corresponding to the mounting holes of the heating coil.

In this embodiment, the mounting holes are provided on the heating coil, the temperature-sensing members are arranged in the mounting holes of the heating coil, and it is defined that an end of each limiting temperature-sensing member abuts against the heat-conducting sheet and the heat of the bearing plate can be transferred to the temperature-sensing members, and a temperature can be measured.

In the above embodiment, the temperature measurement assembly comprises: a bottom housing arranged on the second side of the bearing plate, where the heating coil, the temperature-sensing members and the heat-conducting sheet are arranged between the bottom housing and the bearing plate, the heating coil is arranged on the bottom housing, and relative positions between the temperature-sensing members and the bottom housing are fixed.

In this embodiment, the bottom housing is arranged on the second side of the bearing plate and structures such as the heating coil, the temperature-sensing members and the heat-conducting sheet can be arranged between the bottom housing and the bearing plate. It can be understood that the bottom housing, as a lowest structure of the entire temperature measurement assembly, plays a role in bearing the above plurality of structures. Moreover, the heating coil is arranged on the bottom housing, and it is defined that the relative positions between the temperature-sensing members and the bottom housing are fixed, and the bottom housing plays a role in fixing the heating coil and the temperature-sensing members, and the entire assembly is kept stable.

The temperature-sensing members may be directly arranged on the bottom housing, or arranged on the heating coil and indirectly fixed to the bottom housing.

Further, in the embodiment, a plurality of heating coils may be arranged, the plurality of heating coils are spaced on a base in a ring shape, and the temperature-sensing members are further arranged on the base.

In the above embodiment, the plurality of temperature-sensing members comprise: a first temperature-sensing member; and a plurality of second temperature-sensing members uniformly arranged around the first temperature-sensing member.

In this embodiment, the temperature-sensing member may be divided into the first temperature-sensing member and the second temperature-sensing members according to different arrangement positions. The first temperature-sensing member is arranged in a circumferentially central region, and the second temperature-sensing members are circumferentially arranged around the first temperature-sensing member. A probe portion of the first temperature-sensing member and a probe portion of each second temperature-sensing member, that is, an end of the first temperature-sensing member and an end of each second temperature-sensing member directly abut against the heat-conducting sheet.

In the above embodiment, the temperature measurement assembly further comprises: a heat-insulating member arranged on a side of the heat-conducting sheet away from the bearing plate, where the heat-insulating member is provided with openings adapted to the temperature-sensing members, and at least parts of the temperature-sensing members pass through the openings to abut against the heat-conducting sheet.

In this embodiment, the heat-insulating member is arranged on a lower side of the heat-conducting sheet and temperature measurement can be isolated, an influence, on the temperature-sensing members, of heat generated by the heating coil in an operation process can be reduced, and accuracy of temperature measurement can be ensured. In addition, the heat-insulating member is provided with a plurality of openings, parts of the temperature-sensing members pass through the openings to abut against the heat-conducting sheet, and the openings provided on the heat-insulating member allow the temperature-sensing members to pass through and a temperature can be measured.

The heat-insulating member is in a disc shape, and therefore can be conveniently adapted to arrangement positions of the temperature-sensing members.

In the above embodiment, the heat-insulating member is provided with a plurality of notches corresponding to the positioning grooves, the positioning columns are inserted into the positioning grooves through the notches, and a projection of the heat-insulating member on the bearing plate covers a projection of the heat-conducting sheet on the bearing plate.

In this embodiment, since the heat-insulating member is arranged at the lower side of the heat-conducting sheet, the positioning columns on the heat-conducting sheet can penetrate the heat-insulating member. In order to reduce structural interference, the heat-insulating member is provided with a plurality of notches, and all the positioning columns may pass through the notches to be inserted into the positioning grooves. In the solution, the heat-insulating member is additionally arranged, and the heat-insulating member, the heat-conducting sheet, the temperature-sensing members and the heating coil form a whole and become convenient to mount and replace. By limiting the projection of the heat-insulating member on the bearing plate and the projection of the heat-conducting sheet on the bearing plate, the projection of the heat-insulating member is larger, and may cover the projection of the heat-conducting sheet and a heat insulation effect can be improved. That is, the heat-conducting sheet is completely covered with the heat-insulating member, a heat insulation effect can be improved, and a possibility that since the temperature-sensing members are influenced by temperatures of other heating members and devices, accuracy of temperature measurement has a deviation can be reduced.

It can be understood that a shape of the heat-insulating member is similar to a shape of the heat-conducting sheet, that is, both the shapes may be circles or squares, as long as complete coverage can be achieved.

In the above embodiment, the heat-insulating member is deformable in the thickness direction of the bearing plate, and the thickness of the heat-insulating member is between 1 mm and 5 mm.

In this embodiment, by limiting the material of the heat-insulating member, the material has some elasticity, that is, has some deformation quantity and pre-tightening can be carried out during assembly. The heat-insulating member can apply some pushing force to the upper heat-conducting sheet after assembly, and it is ensured that the heat-conducting sheet can be closely attached to the bearing plate, normal heat conduction can be implemented, and a temperature can be measured.

Further, it is defined that the thickness of the heat-insulating member is between 1 mm and 5 mm, that is, the heat-insulating member is required to have a thickness less than or equal to 5 mm when not deforming, and have a thickness greater than or equal to 1 mm after deforming.

In the above embodiment, the temperature-sensing members comprise: elastic supports in snap-fit with the mounting holes of the heating coil, and the elastic supports are provided with temperature-sensing bodies abutting against the detection position.

In this embodiment, the temperature-sensing members comprise the elastic supports and the temperature-sensing bodies, the temperature-sensing bodies are mainly configured to abut against a detection position and a temperature can be measured, and the elastic supports are configured to support the temperature-sensing bodies, to achieve a fixation effect. That is, the temperature-sensing bodies are fixed in the mounting holes of the heating coil, and the elastic supports are in snap-fit with the mounting holes and connection and fixation can be implemented.

Further, being made of silica gel or other elastic materials, the elastic supports may contract in a vertical direction, and therefore can be pressed and attached to the heat-conducting sheet.

In the above embodiment, the temperature measurement assembly further comprises: limiting bulges arranged on peripheral walls of end portions of the elastic supports; and limiting steps arranged in the mounting holes; where the limiting bulges abut against the limiting steps, and the temperature-sensing members and the mounting holes are assembled.

In this embodiment, the limiting bulges and the limiting steps that are adapted to each other are arranged in the elastic supports and the mounting holes respectively, and when the temperature-sensing members are inserted into the mounting holes downwards, the limiting steps and the limiting bulges abut against each other and are prevented from further moving downwards, achieving limitation and fixation effects. It can be understood that since the elastic supports have a snap-fit relation with the mounting holes, under the action of the limiting bulges and the limiting steps, it can be ensured that the elastic supports are in snap-fit with the mounting holes in place, and connection stability can be improved.

In the above embodiment, the heat-conducting sheet comprises a plurality of heat-conducting regions circumferentially arranged, each of the heat-conducting regions is internally provided with a detection position, and an end of each temperature-sensing member abuts against the detection position.

In this embodiment, the heat-conducting sheet comprises a plurality of heat-conducting regions, the plurality of heat-conducting regions are circumferentially arranged, and each of the heat-conducting regions is internally provided with a detection position and the temperature-sensing members can be conveniently attached to the detection position, and a temperature in this heat-conducting region can be measured.

The bearing plate may be a borosilicate glass plate, which has a relatively low thermal expansion coefficient, stable performance and relatively high water resistance, alkali resistance, acid resistance, etc. However, the borosilicate glass plate has poor high-temperature resistance. In the present disclosure, in order to rapidly measure a temperature and avoid face plate cracking caused by an excess local temperature, a plurality of temperature-sensing members are arranged for multi-point temperature measurement. The bearing plate may be an electrical insulating plate, and it is ensured that the temperature-sensing members cannot be short-circuited. Moreover, the bearing plate may be a heat-insulating plate, and when the temperature measurement assembly is placed in an apparatus, an operation temperature of a heating device located on the other side of the bearing plate in the apparatus does not affect a temperature measurement effect of the temperature-sensing members, and accuracy of temperature measurement can be ensured.

+ The temperature measurement assembly can comprise: a bearing plate, where a first side of the bearing plate is provided with a bearing region; a heat-conducting sheet arranged on a second side of the bearing plate, where the heat-conducting sheet is attached to the bearing plate; a heating coil arranged on a side of the heat-conducting sheet away from the bearing plate, where a projection of the heating coil on the bearing plate forms a first region; and a plurality of temperature-sensing members arranged on a side of the heat-conducting sheet away from the bearing plate, and an end of at least one of the temperature-sensing members abuts against the heat-conducting sheet; where the bearing plate is provided with a ring-shaped region, a circle center of the ring-shaped region is a center point of the first region, an inner diameter of the ring-shaped region is 1/6 of a size of the first region in a first radial direction, an outer diameter of the ring-shaped region is 5/6 of a size of the first region in a second radial direction, a circumscribed circle of the projection of the heat-conducting sheet on the bearing plate overlaps a projection of the heating coil on the bearing plate, and overlapping parts are located in the ring-shaped region.

The temperature measurement assembly provided in the present disclosure mainly comprises the bearing plate, the heat-conducting sheet, the heating coil and the temperature-sensing members, and the bearing plate is configured to bear a cooking utensil. The heat-conducting sheet is arranged on a side of the bearing plate, in an embodiment a side away from the cooking utensil, that is, an outer surface of the bearing plate is configured to bear the cooking utensil, and a side of an inner surface of the bearing plate is provided with the heat-conducting sheet and heat can be transferred to the temperature-sensing members by the heat-conducting sheet. Finally, the temperature-sensing members can conveniently measure temperatures of heat-conducting sheets at different positions and a temperature in a specific region on the first side of the bearing plate can be measured. Particularly, in the present disclosure, the temperature-sensing members are arranged on a lower side of the heat-conducting sheet, and the temperature-sensing members abut against the heat-conducting sheet and a temperature of the bearing region can be measured. It should be emphasized that in the present disclosure, the heat of the bearing plate can be transferred to the temperature-sensing members by the heat-conducting sheet and a temperature can be conveniently measured. Moreover, the heat-conducting sheet is attached to the bearing plate and accuracy of temperature measurement can be improved.

It should be emphasized that the heating coil is further arranged on the lower side of the heat-conducting sheet, and the heating coil can heat the cooking utensil placed on the bearing plate and food materials in the cooking utensil can be cooked. The projection of the heating coil on the bearing plate forms the first region. It can be understood that the heating coil has different heating effects on different positions, and there is a heating range. In order to ensure a better heat conduction effect, the relative positions between the heating coil and the heat-conducting sheet are limited, that is, the heat-conducting sheet covers at least an efficient heating range of the heating coil, and the efficient heating range is defined. The bearing plate is provided the ring-shaped region, the circle center of the ring-shaped region is the center point of the first region, the inner diameter of the ring-shaped region is 1/6 of the size of the first region in the first radial direction, and the outer diameter of the ring-shaped region is 5/6 of the size of the first region in the second radial direction. The ring-shaped region formed within this range is the efficient heating range, a heat quantity of the cooking utensil is relatively high within this position range and cooking at high power can be implemented. Moreover, since the heat quantity at this position is relatively high, stress may be generated inside the bearing plate due to a temperature difference, resulting in breakage of an internal structure. Therefore, a temperature can be measured in time through the arrangement of the heat-conducting sheet and the temperature-sensing members.

It should be supplemented that the first radial direction and the second radial direction may be the same direction or different directions.

It can be understood that the size of the ring-shaped region is defined, and when the cooking utensil is placed on the bearing plate, sizes of most cooking utensils can be within the ring-shaped region, and an application range of the product can be effectively expanded.

It should be supplemented that the ring-shaped region is concentric with the first region of the heating coil. On this basis, by limiting the projection of the heat-conducting sheet, the projection of the heat-conducting sheet overlaps the projection of the heating coil and an effect of cooking at high power of the heating coil can be fully used, and usage experience can be improved.

Further, the bearing plate is arranged at a top of the entire temperature measurement assembly, and the first side is configured to bear the cooking utensil. When local dry burning may occur during operation, the heat is transferred to the temperature-sensing members by the heat-conducting sheet located on the second side of the bearing plate. A temperature of a specific position can be measured according to an abutting positional relation between the temperature-sensing members and the heat-conducting sheet. Therefore, a temperature of each portion of a bottom of a pot can be accurately measured and cooking experience can be ensured. Further, operation of the product can be controlled according to a specific temperature change and a face plate can be effectively protected.

It can be understood that by the plurality of temperature-sensing members, a temperature of a specific region on the bearing plate can be accurately and rapidly measured and a control plate can subsequently conveniently measure temperatures in different temperature measurement regions, to control the temperatures.

The first side, which is generally an upper surface, of the bearing plate is provided with the bearing region. That is, the cooking utensil can only be placed on a designated bearing region and a better cooking effect can be achieved.

In the above embodiment, the projection of the heating coil on the bearing plate covers the circumscribed circle of the projection of the heat-conducting sheet on the bearing plate; or the circumscribed circle of the projection of the heat-conducting sheet on the bearing plate covers the projection of the heating coil on the bearing plate.

In this embodiment, the shape of the heating coil and the shape of the heat-conducting sheet are defined and it can be ensured that when the heating coil carries out heating, heat generated by cooking utensils such as pots can be effectively transferred by the heat-conducting sheet, the temperature-sensing members can sense temperatures in time, and subsequent treatment is convenient. In an embodiment, on the bearing plate, the projection of the heating coil is larger and covers the projection of the heat-conducting sheet, or the projection of the heat-conducting sheet is larger and covers the projection of the heating coil. However, no matter what the specific positional relation between the heat-conducting sheet and the heating coil is, the heat-conducting sheet and the heating coil have overlapping parts, the overlapping parts are located in the ring-shaped region, and cooking can be carried out at efficient heating power of the heating coil.

Further, the heating coil is in a ring shape, and the heat-conducting sheet is in a ring shape;
the heating coil is in a ring shape, and the heat-conducting sheet in a circle shape; or
the heating coil in a circle shape, and the heat-conducting sheet is in a ring shape.

In the above embodiment, the heat-conducting sheet comprises a plurality of heat-conducting regions circumferentially arranged, each of the heat-conducting regions is internally provided with a detection position and a heat-conducting strip extending from the detection position to a periphery, and an end of each temperature-sensing member abuts against the detection position.

In this embodiment, the heat-conducting sheet is composed of a plurality of heat-conducting regions, the plurality of heat-conducting regions are circumferentially arranged, and the ring-shaped region can be fully filled with the heat-conducting regions, and after heat generated by the heating coil is transferred to the cooking utensil, through measurement of the heat-conducting regions at different circumferential positions, a region in which heating is abnormal can be quickly and accurately determined. Moreover, normal cooking can be ensured through timely treatment.

It should be supplemented that each of the heat-conducting regions is internally provided with a detection position and a heat-conducting strip extending from the detection position to a periphery, and when heating at any position in the heat-conducting region is abnormal, heat can be transferred to the detection position by the heat-conducting strip, and a temperature can be measured.

It can be understood that the heat-conducting strip may extend in a radial direction or like petals, as long as temperatures in different regions can be measured.

In the above embodiment, the plurality of heat-conducting regions are uniformly spaced in a circumferential direction, at least one of the heat-conducting regions is connected to two circumferentially-adjacent heat-conducting regions by at least one heat-conducting strip, and at least two of the heat-conducting regions are each connected to one circumferentially-adjacent heat-conducting region by at least one heat-conducting strip.

In this embodiment, by limiting the plurality of heat-conducting regions, the plurality of heat-conducting regions are arranged in a circumferential array, that is, are uniformly spaced in a circumferential direction and heating and heat conduction of most cooking utensils can be more satisfied, and a temperature measurement effect can be improved.

In a solution, in a case that the heat-conducting sheet cannot be magnetized by the heating coil, the plurality of heat-conducting regions may be connected to each other to form a whole, and it may further be defined that two heat-conducting regions are not connected to each other and an opening is provided therebetween.

In the above embodiment, the heat-conducting sheet is made of a magnetizable material, and at least two adjacent heat-conducting regions of the plurality of heat-conducting regions are not connected to each other.

In this embodiment, in a case that the heat-conducting sheet is made of a magnetizable material, such as iron, cobalt, nickel or alloys thereof, if the plurality of heat-conducting regions are connected to each other, the heat-conducting sheet can generate heat and a temperature measured by the temperature-sensing members is common heat of the heat-conducting sheet and the bearing plate, and heat of the bearing plate cannot be accurately measured. The shape of the magnetizable heat-conducting sheet is limited to a non-full circle shape, and a temperature measured by the temperature-sensing members only corresponds to a temperature of the bearing plate, and an influence of self-heating of the heat-conducting sheet is reduced.

In the above embodiment, a heat transfer rate of a material of the heat-conducting sheet is greater than a heat transfer rate of a material of the bearing plate.

In this embodiment, by limiting the material of the heat-conducting sheet and the material of the bearing plate, the material of the heat-conducting sheet can more easily conduct heat, that is, the heat transfer rate of the material of the heat-conducting sheet is greater than the heat transfer rate of the material of the bearing plate. Therefore, the heat of the bearing plate can be preferentially conducted by the heat-conducting sheet, the temperature-sensing members can conveniently measure a temperature by the detection position on the heat-conducting sheet, and a speed of measuring a temperature of the bearing plate can be increased.

In the above embodiment, the plurality of temperature-sensing members comprise: a first temperature-sensing member; and a plurality of second temperature-sensing members uniformly arranged around the first temperature-sensing member, where an end of each second temperature-sensing member abuts against the heat-conducting sheet.

In this embodiment, the temperature-sensing member may be divided into the first temperature-sensing member and the second temperature-sensing members according to different arrangement positions, the first temperature-sensing member is arranged in a circumferentially central region, the second temperature-sensing members are circumferentially arranged around the first temperature-sensing member, and the second temperature-sensing members abut against the heat-conducting sheet and the temperature of the bearing plate can be measured.

In the above embodiment, the temperature measurement assembly further comprises: a heat-insulating member arranged on a side of the heat-conducting sheet away from the bearing plate, where the heat-insulating member is provided with openings adapted to the temperature-sensing members, and at least parts of the temperature-sensing members pass through the openings to abut against the detection position.

In this embodiment, the heat-insulating member is arranged on a lower side of the heat-conducting sheet and temperature measurement can be isolated, an influence, on the temperature-sensing members, of heat generated by the heating coil in an operation process can be reduced, and accuracy of temperature measurement can be ensured. In addition, the heat-insulating member is provided with a plurality of openings, parts of the temperature-sensing members pass through the openings to abut against the heat-conducting sheet, and the openings provided on the heat-insulating member allow the temperature-sensing members to pass through and a temperature can be measured.

The heat-insulating member is in a disc shape, and therefore can be conveniently adapted to arrangement positions of the temperature-sensing members.

In the above embodiment, a projection of the heat-insulating member on the bearing plate covers a projection of the heat-conducting sheet on the bearing plate.

In this embodiment, since the heat-insulating member is arranged at the lower side of the heat-conducting sheet, the positioning columns on the heat-conducting sheet can penetrate the heat-insulating member. In order to reduce structural interference, the heat-insulating member is provided with a plurality of notches, and all the positioning columns may pass through the notches to be inserted into the positioning grooves. In the solution, the heat-insulating member is additionally arranged, and the heat-insulating member, the heat-conducting sheet, the temperature-sensing members and the heating coil form a whole and become convenient to mount and replace. By limiting the projection of the heat-insulating member on the bearing plate and the projection of the heat-conducting sheet on the bearing plate, the projection of the heat-insulating member is larger, and may cover the projection of the heat-conducting sheet and a heat insulation effect can be improved. That is, the heat-conducting sheet is completely covered with the heat-insulating member, a heat insulation effect can be improved, and a possibility that since the temperature-sensing members are influenced by temperatures of other heating members and devices, accuracy of temperature measurement has a deviation can be reduced.

It can be understood that a shape of the heat-insulating member is similar to a shape of the heat-conducting sheet, that is, both the shapes may be circles or squares, as long as complete coverage can be achieved.

Further, by limiting the material of the heat-insulating member, the material has some elasticity, that is, has some deformation quantity and pre-tightening can be carried out during assembly. The heat-insulating member can apply some pushing force to the upper heat-conducting sheet after assembly, and it is ensured that the heat-conducting sheet can be closely attached to the bearing plate, normal heat conduction can be implemented, and a temperature can be measured.

Further, it is defined that the thickness of the heat-insulating member is between 1 mm and 5 mm, that is, the heat-insulating member is required to have a thickness less than or equal to 5 mm when not deforming, and have a thickness greater than or equal to 1 mm after deforming.

In the above embodiment, the bearing plate is a glass plate.

In this embodiment, by limiting the material of the bearing plate, the bearing plate is made of a material having relatively low cost. In order to solve the problem of a low thermal expansion coefficient, efficient heating may be carried out in the ring-shaped region, at this time, through the arrangement of the heat-conducting sheet, the heat of the bearing plate can be transferred to the temperature-sensing members, a temperature can be conveniently measured, and damage to the glass plate is reduced. In addition, the heat-conducting sheet is attached to the bearing plate and accuracy of temperature measurement can be improved.

Further, the bearing plate may be a borosilicate glass plate, which has a relatively low thermal expansion coefficient, stable performance and relatively high water resistance, alkali resistance, acid resistance, etc. However, the borosilicate glass plate has poor high-temperature resistance. In the present disclosure, in order to rapidly measure a temperature and avoid face plate cracking caused by an excess local temperature, a plurality of temperature-sensing members are arranged for multi-point temperature measurement. A temperature measurement plate may be an electrical insulating plate, and the temperature-sensing members cannot be short-circuited. Moreover, the temperature measurement plate may be a heat-insulating plate, and when the temperature measurement assembly is placed in an apparatus, an operation temperature of a heating device located on the other side of the temperature measurement plate in the apparatus does not affect a temperature measurement effect of the temperature-sensing members, and accuracy of temperature measurement can be ensured.

An embodiment of a second aspect of the present disclosure provides a cooking apparatus. The cooking apparatus comprises: a housing; and any one of the temperature measurement assemblies in the first aspect arranged in the housing.

The cooking apparatus provided in the present disclosure comprises a housing, a temperature measurement assembly arranged in the housing, and a heating coil arranged below the temperature measurement assembly, and the housing mainly protects internal electronic members and physical structures.

Since the cooking apparatus comprises a temperature measurement assembly, the cooking apparatus has beneficial effects of any one of the temperature measurement assemblies in embodiments of the first aspect, which will not be repeated herein.

The cooking apparatus comprises, but is not limited to, an induction cooker, an electric ceramic stove, an electric cooker and other apparatuses of which temperatures of bearing plates are required to be measured and obtained.

In the above embodiment, the housing comprises: a bottom housing; and an upper cover detachably connected to the bottom housing, where the upper cover and the bottom housing are connected to form an accommodation cavity, a heat-conducting sheet and a control plate of the temperature measurement assembly are arranged in the accommodation cavity, and a bearing plate of the temperature measurement assembly is attached to the upper cover.

In this embodiment, the housing mainly comprises a bottom housing and an upper cover which are detachably connected; the two structures are connected, an accommodation cavity may be formed inside, and a heat-conducting sheet, a control plate and other structures may be placed in the accommodation cavity; and the bearing plate is arranged on the other side of the upper cover to play a role in bearing a cooking utensil.

Additional aspects and advantages of embodiments of the present disclosure will become obvious in the following description, or can be known by practice of the present disclosure.

### BRIEF DESCRIPTION OF THE DRAWINGS

Fig. 1 shows a schematic structural diagram of a temperature measurement assembly according to an embodiment of the present disclosure;
Fig. 2 shows a schematic structural diagram of a temperature measurement assembly according to an embodiment of the present disclosure;
Fig. 3 shows a schematic structural diagram of a temperature-sensing member according to an embodiment of the present disclosure;
Fig. 4 shows a schematic structural diagram of a heat-conducting sheet and a heat-insulating member according to an embodiment of the present disclosure;
Fig. 5 shows a schematic structural diagram of a cooking apparatus according to an embodiment of the present disclosure;
Fig. 6 shows a schematic structural diagram of a ring-shaped region according to an embodiment of the present disclosure;
Fig. 7 shows a schematic diagram of relative positions between a heat-conducting sheet and a heating coil according to an embodiment of the present disclosure;
Fig. 8 shows a schematic diagram of relative positions between a heat-conducting sheet and a heating coil according to an embodiment of the present disclosure;
Fig. 9 shows a schematic structural diagram of a temperature measurement assembly according to an embodiment of the present disclosure;
Fig. 10 shows a schematic structural diagram of a heat-conducting sheet and a heat-insulating member according to an embodiment of the present disclosure; and
Fig. 11 shows a schematic diagram of relative positions between a heat-conducting sheet and a heating coil according to an embodiment of the present disclosure.

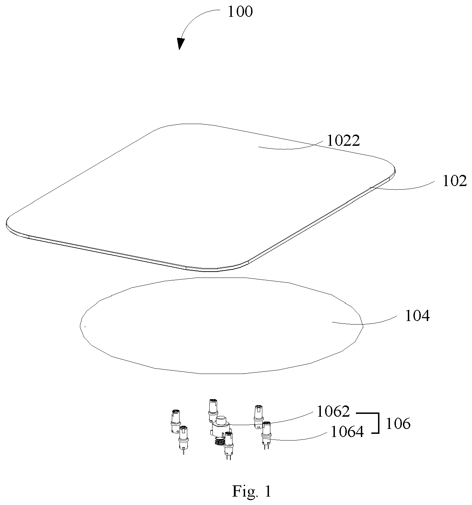

Corresponding relations between reference numerals and component names in Figs. 1-11 are as follows:
100: temperature measurement assembly, 102: bearing plate, 1022: bearing region, 104: heat-conducting sheet, 1042: positioning column, 1044: heat-conducting region, 1046: detection position, 106: temperature-sensing member 1062: first temperature-sensing member, 1064: second temperature-sensing member, 1066: elastic support, 1068: temperature-sensing body, 108: heat-insulating member, 1082: notch, 112: control plate, 114: opening, 1162: limiting bulge, 1164: limiting step,
1110: ring-shaped region, 1112: temperature measurement circle,
200: cooking apparatus, 202: heating coil, 2022: mounting hole, 2024: positioning groove, 204: housing, 2042: bottom housing, and 2044: upper cover.

### DETAILED DESCRIPTION OF THE INVENTION

In order to more clearly understand the above objective, features and advantages of embodiments of the present disclosure, the embodiments of the present disclosure will be further described in detail below in combination with accompanying drawings and particular embodiments. It should be noted that embodiments of the present disclosure and features in the embodiments can be combined with one another if there is no conflict.

Many specific details are set forth in the following description to facilitate full understanding of the present disclosure, but embodiments of the present disclosure can further be implemented in other ways different from those described herein. Therefore, the scope of protection of the present disclosure is not limited to particular embodiments disclosed below, but rather by the appended claims.

Some embodiments of the present disclosure will be described below with reference to Figs. 1-11.

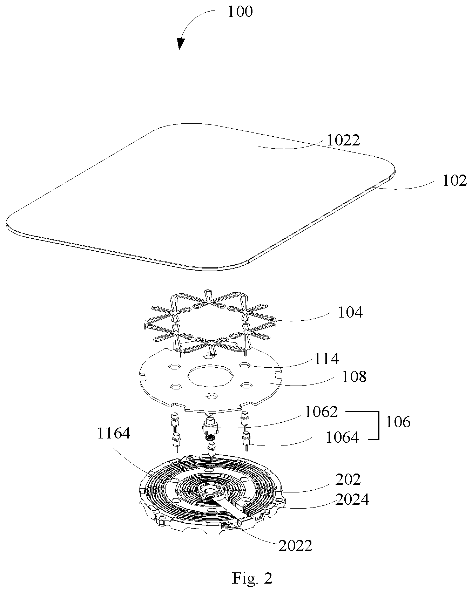

As shown in Fig. 1, a temperature measurement assembly 100 provided in the embodiment mainly comprises a bearing plate 102, a heat-conducting sheet 104, a heating coil 202 and temperature-sensing members 106, and the bearing plate 102 is configured to bear a cooking utensil. The heat-conducting sheet 104 is arranged on a side of the bearing plate 102, in an embodiment a side away from the cooking utensil, that is, an outer surface of the bearing plate 102 is configured to bear the cooking utensil, and a side of an inner surface of the bearing plate is provided with the heat-conducting sheet 104 and heat can be transferred to the temperature-sensing members 106 by the heat-conducting sheet 104. Finally, the temperature-sensing members 106 can conveniently measure temperatures of heat-conducting sheets at different positions 104 and a temperature in a specific region on the first side of the bearing plate 102 can be measured. Particularly, in the present disclosure, the temperature-sensing members 106 are arranged on a lower side of the heat-conducting sheet 104, and the temperature-sensing members 106 abut against the heat-conducting sheet 104 and a temperature of the bearing region 1022 can be measured, as shown in Fig. 2. It should be emphasized that in the present disclosure, the heat of the bearing plate 102 can be transferred to the temperature-sensing members 106 by the heat-conducting sheet 104 and a temperature can be conveniently measured. Moreover, the heat-conducting sheet 104 is attached to the bearing plate 102 and accuracy of temperature measurement can be improved.

It should be emphasized that the heating coil 202 is further arranged on the lower side of the heat-conducting sheet 104, and the heating coil 202 is provided with positioning grooves. When the heat-conducting sheet 104 is mounted, positioning columns 1042 on the heat-conducting sheet 104 match the positioning grooves 2024 on the heating coil 202, the positioning columns 1042 extend in the thickness direction, and the positioning columns 1042 extend into the positioning grooves 2024, and the heat-conducting sheet 104 is mounted on the heating coil 202. Since the temperature-sensing members 106 are arranged in mounting holes 2022 of the heating coil 202, the heat-conducting sheet 104, the heating coil 202 and the temperature-sensing members 106 form a whole, and modular replacement and mounting requirements can be satisfied.

Further, the bearing plate 102 is arranged at a top of the entire temperature measurement assembly 100, and the first side is configured to bear the cooking utensil. When local dry burning may occur during operation, the heat is transferred to the temperature-sensing members 106 by the heat-conducting sheet 104 located on the second side of the bearing plate 102. A temperature of a specific position can be measured according to an abutting positional relation between the temperature-sensing members 106 and the heat-conducting sheet 104. Therefore, a temperature of each portion of a bottom of a pot can be accurately measured and cooking experience can be ensured. Further, operation of the product can be controlled according to a specific temperature change and a face plate can be effectively protected.

It can be understood that by the plurality of temperature-sensing members 106, a temperature of a specific region on the bearing plate 102 can be accurately and rapidly measured and a control plate 112 can subsequently conveniently measure temperatures in different temperature measurement regions, to control the temperatures.

In an embodiment, the temperature-sensing members 106 are arranged on the heating coil 202. In an embodiment, the mounting holes 2022 are provided on the heating coil 202, the temperature-sensing members 106 are arranged in the mounting holes 2022 of the heating coil 202, and it is defined that an end of each limiting temperature-sensing member 106 abuts against the heat-conducting sheet 104 and the heat of the bearing plate 102 can be transferred to the temperature-sensing members 106, and a temperature can be measured.

In another embodiment, the temperature-sensing members 106 are arranged on a bottom housing 2042. In an embodiment, the bottom housing 2042 is arranged on the second side of the bearing plate 102 and structures such as the heating coil 202, the temperature-sensing members 106 and the heat-conducting sheet 104 can be arranged between the bottom housing 2042 and the bearing plate 102. It can be understood that the bottom housing, as a lowest structure of the entire temperature measurement assembly, plays a role in bearing the above plurality of structures. Moreover, the heating coil is arranged on the bottom housing, and it is defined that the relative positions between the temperature-sensing members and the bottom housing are fixed, and the bottom housing plays a role in fixing the heating coil and the temperature-sensing members, and the entire assembly is kept stable.

The temperature-sensing members may be directly arranged on the bottom housing, or arranged on the heating coil and indirectly fixed to the bottom housing.

Further, a plurality of heating coils may be arranged, the plurality of heating coils are spaced on a base in a ring shape, and the temperature-sensing members are further arranged on the base.

The cooking utensil on the bearing plate 102 can be heated under the action of the heating coil 202.

The first side, which is generally an upper surface, of the bearing plate 102 is provided with the bearing region 1022. That is, the cooking utensil can only be placed on a designated bearing region 1022 and a better cooking effect can be achieved.

The temperature-sensing member 106 may be divided into the first temperature-sensing member 1062 and the second temperature-sensing members 1064 according to different arrangement positions. The first temperature-sensing member 1062 is arranged in a circumferentially central region, and the second temperature-sensing members 1064 are circumferentially arranged around the first temperature-sensing member 1062. A probe portion of the first temperature-sensing member 1062 and a probe portion of each second temperature-sensing member 1064, that is, an end of the first temperature-sensing member 1062 and an end of each second temperature-sensing member 1064 directly abut against the heat-conducting sheet 104.

In an embodiment, the heat-insulating member 108 is arranged on a lower side of the heat-conducting sheet 104 and temperature measurement can be isolated, an influence of heat, generated by the heating coil in an operation process, on the temperature-sensing members 106 can be reduced, and accuracy of temperature measurement can be ensured. In addition, the heat-insulating member 108 is provided with a plurality of openings 114, parts of the temperature-sensing members 106 pass through the openings 114 to abut against the heat-conducting sheet 104, and the openings 114 provided on the heat-insulating member 108 allow the temperature-sensing members 106 to pass through and a temperature can be measured.

The heat-insulating member 108 is in a disc shape, and therefore can be conveniently adapted to arrangement positions of the temperature-sensing members 106.

Since the heat-insulating member 108 is arranged at the lower side of the heat-conducting sheet 104, the positioning columns 1042 on the heat-conducting sheet 104 can penetrate the heat-insulating member 108. In order to reduce structural interference, the heat-insulating member 108 is provided with a plurality of notches 1082, and all the positioning columns 1042 may pass through the notches 1082 to be inserted into the positioning grooves 2024. In the solution, the heat-insulating member 108 is additionally arranged, and the heat-insulating member 108, the heat-conducting sheet, the temperature-sensing members 106 and the heating coil 202 form a whole and become convenient to mount and replace. By limiting the projection of the heat-insulating member 108 on the bearing plate 102 and the projection of the heat-conducting sheet 104 on the bearing plate, the projection of the heat-insulating member 108 is larger, and may cover the projection of the heat-conducting sheet and a heat insulation effect can be improved. That is, the heat-conducting sheet 104 is completely covered with the heat-insulating member 108, a heat insulation effect can be improved, and a possibility that since the temperature-sensing members 106 are influenced by temperatures of other heating members and devices, accuracy of temperature measurement has a deviation can be reduced.

It can be understood that a shape of the heat-insulating member 108 is similar to a shape of the heat-conducting sheet 104, that is, both the shapes may be circles or squares, as long as complete coverage can be achieved.

The heat-insulating member 108 is deformable in the thickness direction of the bearing plate 102, and the thickness of the heat-insulating member 108 is between 1 mm and 5 mm. By limiting the material of the heat-insulating member 108, the material of the heat-insulating member has some elasticity, that is, has some deformation quantity and pre-tightening can be carried out during assembly. The heat-insulating member 108 can apply some pushing force to the upper heat-conducting sheet 104 after assembly, and it is ensured that the heat-conducting sheet 104 can be closely attached to the bearing plate 102, normal heat conduction can be implemented, and a temperature can be measured.

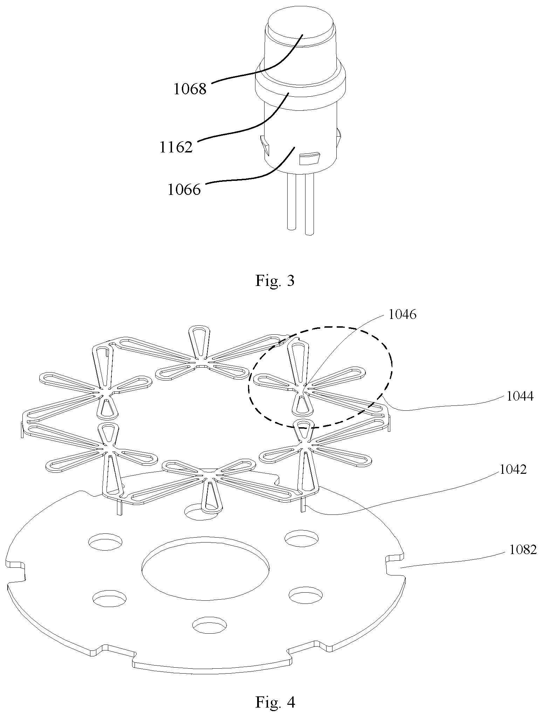

In an embodiment, as shown in Fig. 3, the temperature-sensing members 106 comprise the elastic supports 1066 and the temperature-sensing bodies 1068, the temperature-sensing bodies 1068 are mainly configured to abut against a detection position 1046 and a temperature can be measured, and the elastic supports 1066 are configured to support the temperature-sensing bodies 1068, to achieve a fixation effect. That is, the temperature-sensing bodies 1068 are fixed in the mounting holes 2022 of the heating coil 202, and the elastic supports 1066 are in snap-fit with the mounting holes 2022 and connection and fixation can be implemented.

Further, being made of silica gel or other elastic materials, the elastic supports 1066 may contract in a vertical direction, and therefore can be pressed and attached to the heat-conducting sheet 104.

The limiting bulges 1162 and the limiting steps 1164 that are adapted to each other are arranged in the elastic supports 1066 and the mounting holes 2022 respectively, and when the temperature-sensing members 106 are inserted into the mounting holes 2022 downwards, the limiting steps 1164 and the limiting bulges 1162 abut against each other and are prevented from further moving downwards, achieving limitation and fixation effects. It can be understood that since the elastic supports 1066 have a snap-fit relation with the mounting holes 2022, under the action of the limiting bulges 1162 and the limiting steps 1164, it can be ensured that the elastic supports 1066 are in snap-fit with the mounting holes 2022 in place, and connection stability can be improved.

As shown in Fig. 4, the heat-conducting sheet 104 comprises a plurality of heat-conducting regions 1044, the plurality of heat-conducting regions 1044 are circumferentially arranged, and each of the heat-conducting regions 1044 is internally provided with a detection position 1046 and the temperature-sensing members 106 can be conveniently attached to the detection position 1046, and a temperature in this heat-conducting region 1044 can be measured.

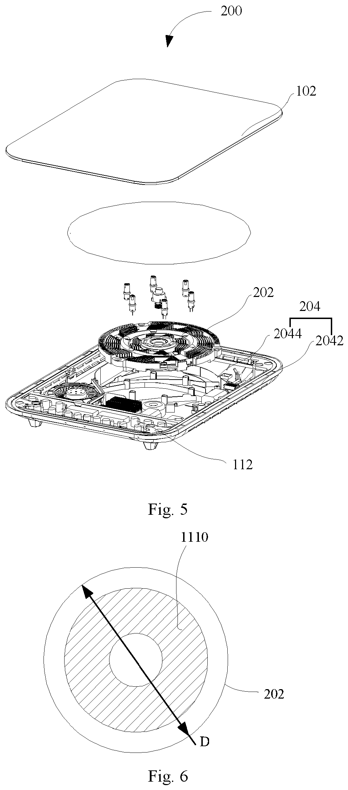

As shown in Fig. 6, a temperature measurement assembly 100 provided in the embodiment mainly comprises a bearing plate 102, a heat-conducting sheet 104, a heating coil 202 and a temperature-sensing members 106, and the bearing plate 102 is configured to bear a cooking utensil. The heat-conducting sheet 104 is arranged on a side of the bearing plate 102, in an embodiment a side away from the cooking utensil, that is, an outer surface of the bearing plate 102 is configured to bear the cooking utensil, and a side of an inner surface of the bearing plate is provided with the heat-conducting sheet 104 and heat can be transferred to the temperature-sensing members 106 by the heat-conducting sheet 104. Finally, the temperature-sensing members 106 can conveniently measure temperatures of heat-conducting sheets 104 at different positions and a temperature in a specific region on the first side of the bearing plate 102 can be measured. Particularly, in the present disclosure, the temperature-sensing members 106 are arranged on a lower side of the heat-conducting sheet 104, and the temperature-sensing members 106 abut against the heat-conducting sheet 104 and a temperature of the bearing region 1022 can be measured. It should be emphasized that in the present disclosure, the heat of the bearing plate 102 can be transferred to the temperature-sensing members 106 by the heat-conducting sheet 104 and a temperature can be conveniently measured. Moreover, the heat-conducting sheet 104 is attached to the bearing plate 102 and accuracy of temperature measurement can be improved.

It should be emphasized that the heating coil 202 is further arranged on the lower side of the heat-conducting sheet 104, and the heating coil 202 can heat the cooking utensil placed on the bearing plate 102 and food materials in the cooking utensil can be cooked. The projection of the heating coil on the bearing plate forms the first region. It can be understood that the heating coil 202 has different heating effects on different positions, and there is a heating range. In order to ensure a better heat conduction effect, the relative positions between the heating coil 202 and the heat-conducting sheet 104 are limited, that is, the heat-conducting sheet 104 covers at least an efficient heating range of the heating coil 202, and the efficient heating range is defined. The bearing plate is provided the ring-shaped region, the circle center of the ring-shaped region is the center point of the first region, the inner diameter of the ring-shaped region is 1/6 of the size of the first region in the first radial direction, and the outer diameter of the ring-shaped region is 5/6 of the size of the first region in the second radial direction. The ring-shaped region formed within this range is the efficient heating range, a heat quantity of the cooking utensil is high within this position range and cooking at high power can be implemented.

Moreover, since the heat quantity at this position is relatively high, stress may be generated inside the bearing plate due to a temperature difference, resulting in breakage of an internal structure. Therefore, a temperature can be measured in time through the arrangement of the heat-conducting sheet and the temperature-sensing members.

It should be supplemented that the first radial direction and the second radial direction may be the same direction or different directions.

The heat-conducting sheet may be in a shape of a solid circular sheet, and an outermost end of an outermost heat-conducting sheet may extend beyond an outer ring of a coil or not.

The heat-conducting sheet may be in a ring-shaped sheet shape, and an innermost end of the heat-conducting sheet may be at a distance from a central position or may extend to the central position.

It should be supplemented that the ring-shaped region is concentric with the first region of the heating coil 202. On this basis, by limiting the projection of the heat-conducting sheet 104, the projection of the heat-conducting sheet overlaps the projection of the heating coil 202 and a cooking at high power effect of the heating coil 202 can be fully used, and usage experience can be improved.

Further, the bearing plate 102 is arranged at a top of the entire temperature measurement assembly 100, and the first side is configured to bear the cooking utensil. When local dry burning may occur during operation, the heat is transferred to the temperature-sensing members 106 by the heat-conducting sheet 104 located on the second side of the bearing plate 102. A temperature of a specific position can be measured according to an abutting positional relation between the temperature-sensing members 106 and the heat-conducting sheet 104. Therefore, a temperature of each portion of a bottom of a pot can be accurately measured and cooking experience can be ensured. Further, operation of the product can be controlled according to a specific temperature change and a face plate can be effectively protected.

It can be understood that by the plurality of temperature-sensing members 106, a temperature of a specific region on the bearing plate 102 can be accurately and rapidly measured and a control plate can subsequently conveniently measure temperatures in different temperature measurement regions, to control the temperatures.

The first side, which is generally an upper surface, of the bearing plate 102 is provided with the bearing region 1022. That is, the cooking utensil can only be placed on a designated bearing region 1022 and a better cooking effect can be achieved.

Further, on the basis of any one of the above embodiments, an assembly mode of the heat-conducting sheet is relatively flexible. In some embodiments, the heat-conducting sheet may be mounted on the heating coil or an upper cover support, or may be assembled on a surface cover or the temperature-sensing members. There is some pre-tightening force between the temperature-sensing members and the heat-conducting sheet, and some pre-tightening force between the heat-conducting sheet and the bearing plate, and the pre-tightening force is used for better contact between the heat-conducting sheet and the bearing plate and between the heat-conducting sheet and the temperature-sensing members.

The heat-conducting sheet and the heat-insulating member may be integrated, and the heat-conducting sheet may extend beyond the outer ring of the heating coil.

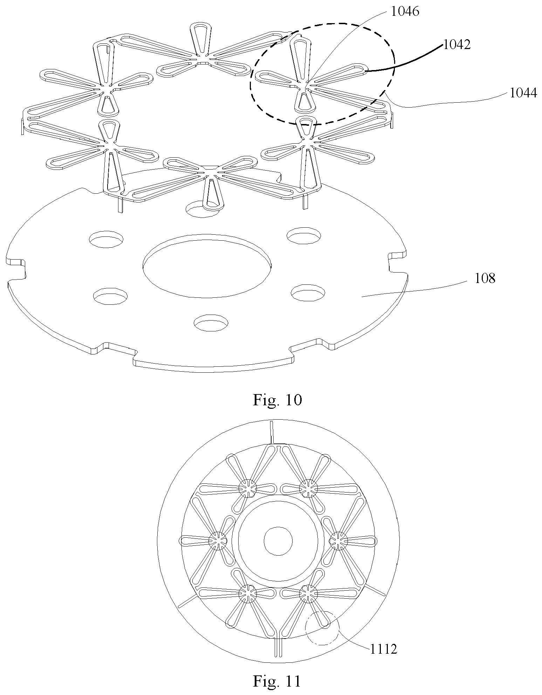

As shown in Fig. 10, a plurality of identical heat-conducting regions are connected by a distal end to form a ring-shaped heat-conducting sheet, and the heat-conducting sheet may have an opening at an edge or not. In a case that the heat-conducting sheet is made of a material capable of being electromagnetically heated, a heat-conducting ring formed by the heat-conducting sheet is required to have an opening. In a case that the heat-conducting sheet is made of a material not capable of being electromagnetically heated, the heat-conducting ring formed by the heat-conducting sheet may have an opening or not.

It should be supplemented that in a case that the heat-conducting sheet 104 is made of a magnetizable material, such as iron, cobalt, nickel or alloys thereof, if the plurality of heat-conducting regions 1044 are connected to each other, the heat-conducting sheet 104 can generate heat and a temperature measured by the temperature-sensing members 106 is common heat of the heat-conducting sheet 104 and the bearing plate, and heat of the bearing plate 102 cannot be accurately measured. The shape of the magnetizable heat-conducting sheet 104 is limited to a non-full circle shape, and a temperature measured by the temperature-sensing members 106 only corresponds to a temperature of the bearing plate 102, and an influence of self-heating of the heat-conducting sheet 104 is reduced.

As shown in Fig. 6, in a case of electromagnetic heating, a region in which a heat quantity of a pot is the best is generally within diameter D of an outer ring of a coil, and a position at 1/6 of diameter D is determined as an inner ring of a temperature measurement region, a position at 5/6 of diameter D is determined as an outer ring of the temperature measurement region, and heat-conducting sheets are distributed in a ring-shaped region 1110 between the inner ring and the outer ring.

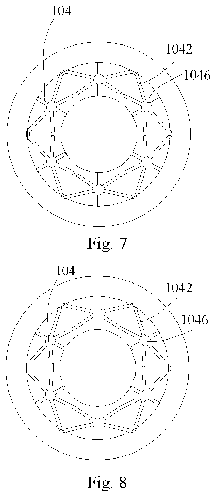

In the solution, as shown in Fig. 11, distribution characteristics of the heat-conducting sheets are as follows: in a case of a circle center of a minimum temperature measurement circle 1112 having a diameter of 30 mm is located at any point in the ring-shaped region 1110, the circle center can overlap a vertical projection of the heat-conducting sheet on a face plate. On the basis of the above, the heat-conducting sheets may be distributed as shown in Figs. 7 and 8.

In a particular embodiment, the diameter of the minimum temperature measurement circle may be selected from 1 mm to 80 mm, in some embodiments, the diameter may be 30 mm.

A thickness of the heat-conducting sheet may be selected from 0.01 mm to 100 mm, and all thicknesses are within this range even different materials may vary in thickness. By limiting a position of the minimum temperature measurement circle, it is defined that the circle center at any position is within the ring-shaped region. Moreover, the circle center of the minimum temperature measurement circle overlaps the projection of the heat-conducting sheet on the bearing plate, and the heat-conducting sheet is mainly made of a material of which a heat transfer rate is greater than a heat transfer rate of a supporting plate. In some embodiments, in a case that the supporting plate is a microcrystalline plate or tempered glass plate, the heat-conducting sheet may be made of metal such as aluminum, iron or silver. The heat-conducting sheet may be in other three-dimensional shapes, but the vertical projection of the heat-conducting sheet on a face plate can always overlap the minimum temperature measurement circle (the circle center of the minimum temperature measurement circle is within temperature measuring ring-shaped region S). In a case that the coil is in a square shape, a maximum circumscribed circle of the square coil is taken as diameter D of the outer ring. An outermost end of the heat-conducting sheet may extend beyond the outer ring of the coil or not, an innermost end of the heat-conducting sheet may extend to a central position to assist a central temperature sensor in temperature measurement. In the patent, a size limit circle of the heat-conducting sheet has a diameter of 2D (D is a size of the coil, and the heat-conducting sheets are distributed within the size limit circle).

The shape of the heating coil 202 and the shape of the heat-conducting sheet 104 are defined and it can be ensured that when the heating coil 202 carries out heating, heat generated by cooking utensils such as pots can be effectively transferred by the heat-conducting sheet 104, the temperature-sensing members 106 can sense temperatures in time, and subsequent treatment is convenient. In an embodiment, on the bearing plate 102, the projection of the heating coil 202 is larger and covers the projection of the heat-conducting sheet 104, or the projection of the heat-conducting sheet 104 is larger and covers the projection of the heating coil 202. However, no matter what the specific positional relation between the heat-conducting sheet 104 and the heating coil 202 is, the heat-conducting sheet and the heating coil have overlapping parts, the overlapping parts are located in the ring-shaped region, and cooking can be carried out at efficient heating power of the heating coil 202.

In an embodiment, the heating coil 202 is in a ring shape, and the heat-conducting sheet 104 is in a ring shape.

In another embodiment, the heating coil 202 is in a ring shape, and the heat-conducting sheet 104 in a circle shape.

In another embodiment, the heating coil 202 in a circle shape, and the heat-conducting sheet 104 is in a ring shape.

The heat-conducting sheet 104 is composed of a plurality of heat-conducting regions 1044, the plurality of heat-conducting regions 1044 are circumferentially arranged, and the ring-shaped region can be fully filled with the heat-conducting regions, and after heat generated by the heating coil 202 is transferred to the cooking utensil, through measurement of the heat-conducting regions 1044 at different circumferential positions, a region in which heating is abnormal can be quickly and accurately determined. Moreover, normal cooking can be ensured through timely treatment.

It should be supplemented that each of the heat-conducting regions 1044 is internally provided with a detection position 1046 and a heat-conducting strip extending from the detection position 1046 to a periphery, and when heating at any position in the heat-conducting region 1044 is abnormal, heat can be transferred to the detection position 1046 by the heat-conducting strip, and a temperature can be measured.

It can be understood that the heat-conducting strip may extend in a radial direction or like petals, as long as temperatures in different regions can be measured.

By limiting the plurality of heat-conducting regions 1044, the plurality of heat-conducting regions 1044 are arranged in a circumferential array, that is, are uniformly spaced in a circumferential direction and heating and heat conduction of most cooking utensils can be more satisfied, and a temperature measurement effect can be improved.

In a solution, in a case that the heat-conducting sheet 104 cannot be magnetized by the heating coil 202, the plurality of heat-conducting regions 1044 may be connected to each other to form a whole, and it may further be defined that two heat-conducting regions 1044 are not connected to each other, and an opening is provided therebetween.

In another solution, in a case that the heat-conducting sheet 104 cannot be magnetized by the heating coil 202, at least two of the plurality of heat-conducting regions 1044 are not connected to each other.

By limiting the material of the heat-conducting sheet 104 and the material of the bearing plate 102, the material of the heat-conducting sheet 104 can more easily conduct heat, that is, the heat transfer rate of the material of the heat-conducting sheet 104 is greater than the heat transfer rate of the material of the bearing plate 102. Therefore, the heat of the bearing plate 102 can be preferentially conducted by the heat-conducting sheet 104, the temperature-sensing members 106 can conveniently measure a temperature by the detection position 1046 on the heat-conducting sheet 104, and a speed of measuring a temperature of the bearing plate 102 can be increased.

The temperature-sensing member 106 may be divided into the first temperature-sensing member 1062 and the second temperature-sensing members 1064 according to different arrangement positions. The first temperature-sensing member 1062 is arranged in a circumferentially central region, and the second temperature-sensing members 1064 are circumferentially arranged around the first temperature-sensing member 1062. A probe portion of the first temperature-sensing member 1062 and a probe portion of each second temperature-sensing member 1064, that is, an end of the first temperature-sensing member 1062 and an end of each second temperature-sensing member 1064 directly abut against the heat-conducting sheet 104.

In an embodiment, the heat-insulating member 108 is arranged on a lower side of the heat-conducting sheet 104 and temperature measurement can be isolated, an influence of heat, generated by the heating coil in an operation process, on the temperature-sensing members 106 can be reduced, and accuracy of temperature measurement can be ensured. In addition, the heat-insulating member 108 is provided with a plurality of openings, parts of the temperature-sensing members 106 pass through the openings to abut against the heat-conducting sheet 104, and the openings provided on the heat-insulating member 108 allow the temperature-sensing members 106 to pass through and a temperature can be measured.

The heat-insulating member 108 is in a disc shape, and therefore can be conveniently adapted to arrangement positions of the temperature-sensing members 106.

It can be understood that a shape of the heat-insulating member 108 is similar to a shape of the heat-conducting sheet 104, that is, both the shapes may be circles or squares, as long as complete coverage can be achieved.

The heat-insulating member 108 is deformable in the thickness direction of the bearing plate 102, and the thickness of the heat-insulating member 108 is between 1 mm and 5 mm. By limiting the material of the heat-insulating member 108, the material of the heat-insulating member has some elasticity, that is, has some deformation quantity and pre-tightening can be carried out during assembly. The heat-insulating member 108 can apply some pushing force to the upper heat-conducting sheet 104 after assembly, and it is ensured that the heat-conducting sheet 104 can be closely attached to the bearing plate 102, normal heat conduction can be implemented, and a temperature can be measured.

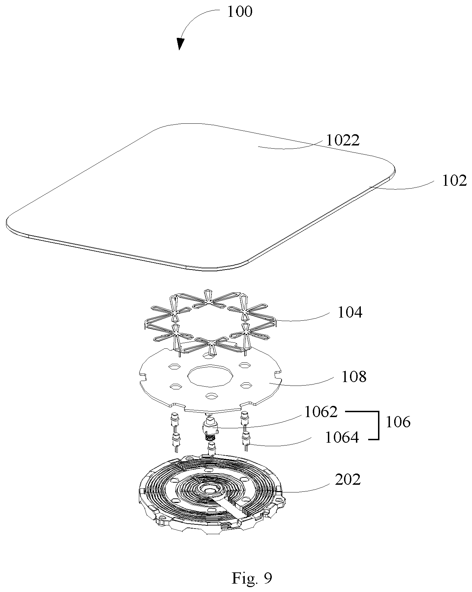

As shown in Fig. 9, the heat-conducting sheet 104 comprises a plurality of heat-conducting regions 1044, the plurality of heat-conducting regions 1044 are circumferentially arranged, and each of the heat-conducting regions 1044 is internally provided with a detection position 1046 and the temperature-sensing members 106 can be conveniently attached to the detection position 1046, and a temperature in this heat-conducting region 1044 can be measured.

The bearing plate 102 may be a borosilicate glass plate, which has a relatively low thermal expansion coefficient, stable performance and relatively high water resistance, alkali resistance, acid resistance, etc. However, the borosilicate glass plate has poor high-temperature resistance. In the present disclosure, in order to rapidly measure a temperature and avoid face plate cracking caused by an excess local temperature, a plurality of temperature-sensing members 106 are arranged for multi-point temperature measurement. A temperature measurement plate may be an electrical insulating plate, and the temperature-sensing members 106 cannot be short-circuited. Moreover, the temperature measurement plate may be a heat-insulating plate, and when the temperature measurement assembly 100 is placed in an apparatus, an operation temperature of a heating device located on the other side of the temperature measurement plate in the apparatus does not affect a temperature measurement effect of the temperature-sensing members 106, and accuracy of temperature measurement can be ensured.

As shown in Fig. 5, the embodiment provides a cooking apparatus 200. The cooking apparatus comprises a housing 204, a temperature measurement assembly 100 and a heating coil arranged below the temperature measurement assembly 100, and a cooking utensil on the bearing plate 102 can be heated under the action of the heating coil.

Since the cooking apparatus 200 comprises a temperature measurement assembly 100, the cooking apparatus has beneficial effects of any one of the temperature measurement assemblies 100 in embodiments of the first aspect, which will not be repeated herein.

The cooking apparatus 200 comprises, but is not limited to, an induction cooker, an electric ceramic stove, an electric cooker and other apparatuses of which temperatures of bearing plates are required to be measured and obtained 102.

Further, as shown in Fig. 5, the housing 204 mainly comprises a bottom housing 2042 and an upper cover 2044 which are detachably connected; the two structures are connected, an accommodation cavity may be formed inside, and a heat-conducting sheet, a control plate and other structures may be placed in the accommodation cavity; and the bearing plate is arranged on the other side of the upper cover to play a role in bearing a cooking utensil.

The embodiments of the present disclosure are described in detail above with reference to accompanying drawings. Through the embodiments of the present disclosure, the positioning columns match the positioning grooves and the heat-conducting sheet, the heating coil and the temperature-sensing members can form a whole, and modular replacement and mounting requirements can be satisfied.

In the present disclosure, terms "first", "second" and "third" are merely used for a descriptive purpose and cannot be understood as indicating or implying relative importance; and term "plurality" refers to two or above, unless explicitly defined otherwise. Terms "mount", "connected", "connection", "fixed", etc. should be understood in a broad sense. In some embodiments, "connection" can be fixed connection, detachable connection or integrated connection; and "connected" can indicate direct connection or indirect connection via an intermediary medium. Those of ordinary skill in the art can understand the specific meanings of the above terms in the present disclosure according to specific circumstances.

In the description of the present disclosure, it should be understood that orientation or positional relations indicated by terms "up", "down", "left", "right", "front", "rear", etc. are based on orientation or positional relations shown in accompanying drawings, are merely for facilitating the description of the present disclosure and simplifying the description, rather than indicating or implying that a device or unit referred to must have a particular orientation or be constructed and operated in a particular orientation, and therefore cannot be understood as limiting the present disclosure.

In the description, terms "an embodiment", "some embodiments", "particular embodiment", etc. mean that a specific feature, structure, material or characteristic described in combination with the embodiment or instance is comprised in at least one embodiment or instance of the present disclosure. In the description, the schematic expressions of the above terms do not necessarily refer to the same embodiment or instance. Moreover, the specific feature, structure, material or characteristic described can be combined in a suitable manner in any one or more embodiment or instances.

## Claims

1. A temperature measurement assembly (100), comprising:
a bearing plate (102), wherein a first side of the bearing plate (102) is provided with a bearing region (1022);
a heat-conducting sheet (104) arranged on a second side of the bearing plate (102), wherein the heat-conducting sheet (104) is attached to the bearing plate (102);
**characterized in that** the temperature measurement assembly (100) comprises:
a heating coil (202) arranged on a side of the heat-conducting sheet (104) away from the bearing plate (102), wherein the heating coil (202) is provided with a plurality of positioning grooves (2024); and
a plurality of temperature-sensing members (106) arranged on the second side of the bearing plate (102), wherein an end of each temperature-sensing member (106) abuts against the heat-conducting sheet (104); wherein
the heat-conducting sheet (104) is provided with a plurality of positioning columns (1042) extending in a thickness direction of the bearing plate (102), and an assembly of the heat-conducting sheet (104) and the heating coil (202) is achieved by a matching of the positioning columns (1042) and the positioning grooves (2022).

2. The temperature measurement assembly (100) according to claim 1, further comprising:
a plurality of mounting holes (2022) provided on the heating coil (202); wherein
the plurality of temperature-sensing members (106) are disposed corresponding to the mounting holes (2022) of the heating coil (202); and/or the temperature measurement assembly (100) further comprising:
a bottom housing (2042) arranged on the second side of the bearing plate (102), wherein the heating coil (202), wherein the temperature-sensing members (106) and the heat-conducting sheet (104) are arranged between the bottom housing (2042) and the bearing plate (102), and wherein
the heating coil (202) is arranged on the bottom housing (2042), and relative positions between the temperature-sensing members (106) and the bottom housing (2042) are fixed.

3. The temperature measurement assembly (100) according to claim 1 or 2, further comprising:
a heat-insulating member (108) arranged on a side of the heat-conducting sheet (104) away from the bearing plate (102), wherein the heat-insulating member (108) is provided with openings (114) adapted to the temperature-sensing members (106), and at least a part of the temperature-sensing members (106) pass through the openings (114) to abut against the heat-conducting sheet (104).

4. The temperature measurement assembly (100) according to claim 3, wherein the heat-insulating member (108) is provided with a plurality of notches (1082), wherein the plurality of notches (1082) corresponding to the positioning grooves (2022), the positioning columns (1042) are inserted into the positioning grooves (2022) through the notches (1082), and a projection of the heat-insulating member (108) on the bearing plate (102) covers a projection of the heat-conducting sheet (104) on the bearing plate (102); and/or wherein the heat-insulating member (108) is deformable in the thickness direction of the bearing plate (102), and a thickness of the heat-insulating member (108) is between 1 mm and 5 mm.

5. The temperature measurement assembly (100) according to any one of claims 1 to 4, wherein the temperature-sensing members (106) comprise:
elastic supports (1066) in snap-fit with the mounting holes (2022) of the heating coil (202), and the elastic supports (1066) are provided with temperature-sensing bodies abutting against the heat-conducting sheet (104); wherein the temperature measurement assembly (100) preferably further comprising:
limiting bulges (1162) arranged on peripheral walls of end portions of the elastic supports (1066); and
limiting steps (1164) arranged in the mounting holes (2022); wherein
the limiting bulges (1162) abut against the limiting steps (1164), and the temperature-sensing members (106) and the mounting holes (2022) are assembled.

6. The temperature measurement assembly (100) according to any one of claims 1 to 5, wherein the plurality of temperature-sensing members (106) comprise:
a first temperature-sensing member (1062); and
a plurality of second temperature-sensing members (1064) uniformly arranged around the first temperature-sensing member (1062); and/or wherein the heat-conducting sheet (104) comprises a plurality of heat-conducting regions (1044) circumferentially arranged, wherein each of the heat-conducting regions (1044) is internally provided with a detection position (1046), and an end of each temperature-sensing member (106) abuts against the detection position (1046).

7. The temperature measurement assembly (100) according to one of the previous claims, wherein a projection of the heating coil (202) on the bearing plate (102) forms a first region; and
wherein
the bearing plate (102) is provided with a ring-shaped region (1110), a circle center of the ring-shaped region (1110) is a center point of the first region, an inner diameter of the ring-shaped region (1110) is 1/6 of a size of the first region in a first radial direction, an outer diameter of the ring-shaped region (1110) is 5/6 of a size of the first region in a second radial direction, a circumscribed circle of a projection of the heat-conducting sheet (104) on the bearing plate (102) overlaps a projection of the heating coil (202) on the bearing plate (102), and the overlapping parts are located in the ring-shaped region (1110).

8. The temperature measurement assembly (100) according to claim 7, wherein the projection of the heating coil (202) on the bearing plate (102) covers the circumscribed circle of the projection of the heat-conducting sheet (104) on the bearing plate (102); or
the circumscribed circle of the projection of the heat-conducting sheet (104) on the bearing plate (102) covers the projection of the heating coil (202) on the bearing plate (102).

9. The temperature measurement assembly (100) according to claim 7 or 8, wherein the heat-conducting sheet (104) comprises a plurality of heat-conducting regions (1044) circumferentially arranged, each of the heat-conducting regions (1044) is internally provided with a detection position (1046) and a heat-conducting strip extending from the detection position (1046) to a periphery, and an end of each temperature-sensing member (106) abuts against the detection position (1046).

10. The temperature measurement assembly (100) according to claim 9, wherein the plurality of heat-conducting regions (1044) are uniformly spaced in a circumferential direction, at least one of the heat-conducting regions (1044) is connected to two circumferentially-adjacent heat-conducting regions (1044) by at least one heat-conducting strip, and at least two of the heat-conducting regions (1044) are each connected to one circumferentially-adjacent heat-conducting region (1044) by at least one heat-conducting strip.

11. The temperature measurement assembly (100) according to claim 10, wherein the heat-conducting sheet (104) is made of a magnetizable material, and at least two adjacent heat-conducting regions (1044) of the plurality of heat-conducting regions (1044) are not connected to each other.

12. The temperature measurement assembly (100) according to any one of claims 7 to 10, wherein a heat transfer rate of a material of the heat-conducting sheet (104) is greater than a heat transfer rate of a material of the bearing plate (102); and/or wherein the plurality of temperature-sensing members (106) comprise:
a first temperature-sensing member (1062); and
a plurality of second temperature-sensing members (1064) uniformly arranged around the first temperature-sensing member (1062), wherein an end of each second temperature-sensing member (1064) abuts against the heat-conducting sheet (104); and/or
wherein the bearing plate (102) is a glass plate.

13. The temperature measurement assembly (100) according to claim 9, further comprising:
a heat-insulating member (108) arranged on a side of the heat-conducting sheet (104) away from the bearing plate (102), wherein the heat-insulating member (108) is provided with openings (114) adapted to the temperature-sensing members (106), and at least parts of the temperature-sensing members (106) pass through the openings (114) to abut against the detection position (1046).

14. A cooking apparatus (200), comprising:
a housing (204); and
a temperature measurement assembly (100) according to any one of claims 1 to 13.

15. The cooking apparatus (200) according to claim 14, wherein the housing (204) comprises:
a bottom housing (2042); and
an upper cover (2044) detachably connected to the bottom housing (2042), wherein the upper cover (2044) and the bottom housing (2042) are connected to form an accommodation cavity, a heat-conducting sheet (104) and a control plate (112) of the temperature measurement assembly (100) are arranged in the accommodation cavity, and
a bearing plate (102) of the temperature measurement assembly (100) is attached to the upper cover (2044).

## Patentansprüche

1. Temperaturmessanordnung (100), umfassend:
eine Lagerplatte (102), wobei eine erste Seite der Lagerplatte (102) mit einem Lagerbereich (1022) versehen ist;
ein wärmeleitendes Blech (104), das auf einer zweiten Seite der Lagerplatte (102) angeordnet ist, wobei das wärmeleitende Blech (104) an der Lagerplatte (102) befestigt ist;
**dadurch gekennzeichnet, dass** die Temperaturmessanordnung (100) Folgendes umfasst:
eine Heizspule (202), die auf einer von der Lagerplatte (102) abgewandten Seite des wärmeleitenden Blechs (104) angeordnet ist, wobei die Heizspule (202) mit einer Vielzahl von Positionierungsnuten (2024) versehen ist; und
eine Vielzahl von Temperaturfühlerelementen (106), die auf der zweiten Seite der Lagerplatte (102) angeordnet sind, wobei ein Ende jedes Temperaturfühlerelements (106) an dem wärmeleitenden Blech (104) anliegt; wobei
das wärmeleitende Blech (104) mit einer Vielzahl von Positionierungssäulen (1042) versehen ist, die sich in einer Dickenrichtung der Lagerplatte (102) erstrecken, und eine Anordnung des wärmeleitenden Blechs (104) und der Heizspule (202) durch eine Anpassung der Positionierungssäulen (1042) und der Positionierungsnuten (2022) erreicht wird.

2. Temperaturmessanordnung (100) gemäß Anspruch 1, ferner umfassend:
eine Vielzahl von Befestigungslöchern (2022), die an der Heizspule (202) vorgesehen sind; wobei
die Vielzahl von Temperaturfühlerelementen (106) entsprechend den Befestigungslöchern (2022) der Heizspule (202) angeordnet sind; und/oder die Temperaturmessanordnung (100) ferner Folgendes umfasst:
ein Bodengehäuse (2042), das auf der zweiten Seite der Lagerplatte (102) angeordnet ist, wobei die Heizspule (202), die Temperaturfühlerelemente (106) und das wärmeleitende Blech (104) zwischen dem Bodengehäuse (2042) und der Lagerplatte (102) angeordnet sind, und wobei
die Heizspule (202) am Bodengehäuse (2042) angeordnet ist und die relativen Positionen zwischen den Temperaturfühlerelementen (106) und dem Bodengehäuse (2042) festgelegt sind.

3. Temperaturmessanordnung (100) gemäß Anspruch 1 oder 2, ferner umfassend:
ein wärmeisolierendes Element (108), das auf einer von der Lagerplatte (102) abgewandten Seite des wärmeleitenden Blechs (104) angeordnet ist, wobei das wärmeisolierende Element (108) mit Öffnungen (114) versehen ist, die an die Temperaturfühlerelemente (106) angepasst sind, und zumindest ein Teil der Temperaturfühlerelemente (106) durch die Öffnungen (114) hindurchgeht, um an dem wärmeleitenden Blech (104) anzuliegen.

4. Temperaturmessanordnung (100) gemäß Anspruch 3, wobei das wärmeisolierende Element (108) mit einer Vielzahl von Kerben (1082) versehen ist, wobei die Vielzahl von Kerben (1082) den Positionierungsnuten (2022) entspricht, die Positionierungssäulen (1042) durch die Kerben (1082) in die Positionierungsnuten (2022) eingesetzt sind und ein Vorsprung des wärmeisolierenden Elements (108) auf der Lagerplatte (102) einen Vorsprung des wärmeleitenden Blechs (104) auf der Lagerplatte (102) abdeckt; und/oder wobei das wärmeisolierende Element (108) in der Dickenrichtung der Lagerplatte (102) verformbar ist und eine Dicke des wärmeisolierenden Elements (108) zwischen 1 mm und 5 mm beträgt.

5. Temperaturmessanordnung (100) gemäß einem der Ansprüche 1 bis 4, wobei die Temperaturfühlerelemente (106) Folgendes umfassen:
elastische Stützen (1066) in Schnappverbindung mit den Befestigungslöchern (2022) der Heizspule (202), und die elastischen Stützen (1066) sind mit Temperaturfühlerkörpern versehen, die an dem wärmeleitenden Blech (104) anliegen; wobei die Temperaturmessanordnung (100) vorzugsweise ferner Folgendes umfasst:
Begrenzungswülste (1162), die an den Umfangswänden der Endbereiche der elastischen Stützen (1066) angeordnet sind; und
Begrenzungsstufen (1164), die in den Befestigungslöchern (2022) angeordnet sind; wobei
die Begrenzungswülste (1162) an den Begrenzungsstufen (1164) anliegen und die Temperaturfühlerelemente (106) und die Befestigungslöcher (2022) zusammengefügt sind.

6. Temperaturmessanordnung (100) gemäß einem der Ansprüche 1 bis 5, wobei die Vielzahl von Temperaturfühlerelementen (106) Folgendes umfasst:
ein erstes Temperaturfühlerelement (1062); und
eine Vielzahl von zweiten Temperaturfühlerelementen (1064), die gleichmäßig um das erste Temperaturfühlerelement (1062) herum angeordnet sind; und/oder wobei das wärmeleitende Blech (104) eine Vielzahl von wärmeleitenden Bereichen (1044) umfasst, die in Umfangsrichtung angeordnet sind, wobei jeder der wärmeleitenden Bereiche (1044) innen mit einer Erfassungsposition (1046) versehen ist und ein Ende jedes Temperaturfühlerelements (106) an der Erfassungsposition (1046) anliegt.

7. Temperaturmessanordnung (100) nach einem der vorhergehenden Ansprüche, wobei ein Vorsprung der Heizspule (202) auf der Lagerplatte (102) einen ersten Bereich ausbildet; und
wobei
die Lagerplatte (102) mit einem ringförmigen Bereich (1110) versehen ist, ein Kreismittelpunkt des ringförmigen Bereichs (1110) ein Mittelpunkt des ersten Bereichs ist, ein Innendurchmesser des ringförmigen Bereichs (1110) 1/6 einer Größe des ersten Bereichs in einer ersten radialen Richtung beträgt, ein Außendurchmesser des ringförmigen Bereichs (1110) 5/6 einer Größe des ersten Bereichs in einer zweiten radialen Richtung beträgt, ein umschriebener Kreis eines Vorsprungs des wärmeleitenden Blechs (104) auf der Lagerplatte (102) einen Vorsprung der Heizspule (202) auf der Lagerplatte (102) überlappt, und die überlappenden Teile in dem ringförmigen Bereich (1110) angeordnet sind.

8. Temperaturmessanordnung (100) gemäß Anspruch 7, wobei der Vorsprung der Heizspule (202) auf der Lagerplatte (102) den umschriebenen Kreis des Vorsprungs des wärmeleitenden Blechs (104) auf der Lagerplatte (102) abdeckt; oder
der umschriebene Kreis des Vorsprungs des wärmeleitenden Blechs (104) auf der Lagerplatte (102) den Vorsprung der Heizspule (202) auf der Lagerplatte (102) abdeckt.

9. Temperaturmessanordnung (100) gemäß Anspruch 7 oder 8, wobei das wärmeleitende Blech (104) eine Vielzahl von in Umfangsrichtung angeordneten wärmeleitenden Bereichen (1044) umfasst, wobei jeder der wärmeleitenden Bereiche (1044) im Inneren mit einer Erfassungsposition (1046) und einem wärmeleitenden Streifen versehen ist, der sich von der Erfassungsposition (1046) zu einem Umfang erstreckt, und wobei ein Ende jedes Temperaturfühlerelements (106) an der Erfassungsposition (1046) anliegt.

10. Temperaturmessanordnung (100) gemäß Anspruch 9, wobei die Vielzahl von wärmeleitenden Bereichen (1044) in einer Umfangsrichtung gleichmäßig beabstandet sind, mindestens einer der wärmeleitenden Bereiche (1044) mit zwei in Umfangsrichtung benachbarten wärmeleitenden Bereichen (1044) durch mindestens einen wärmeleitenden Streifen verbunden ist und mindestens zwei der wärmeleitenden Bereiche (1044) jeweils mit einem in Umfangsrichtung benachbarten wärmeleitenden Bereich (1044) durch mindestens einen wärmeleitenden Streifen verbunden sind.

11. Temperaturmessanordnung (100) gemäß Anspruch 10, wobei das wärmeleitende Blech (104) aus einem magnetisierbaren Material hergestellt ist und mindestens zwei benachbarte wärmeleitende Bereiche (1044) der Vielzahl von wärmeleitenden Bereichen (1044) nicht miteinander verbunden sind.

12. Temperaturmessanordnung (100) gemäß einem der Ansprüche 7 bis 10, wobei eine Wärmeübertragungsrate eines Materials des wärmeleitenden Blechs (104) größer ist als eine Wärmeübertragungsrate eines Materials der Lagerplatte (102); und/oder wobei die Vielzahl von Temperaturfühlerelementen (106) Folgendes umfasst:
ein erstes Temperaturfühlerelement (1062); und
eine Vielzahl von zweiten Temperaturfühlerelementen (1064), die gleichmäßig um das erste Temperaturfühlerelement (1062) herum angeordnet sind, wobei ein Ende jedes zweiten Temperaturfühlerelements (1064) an dem wärmeleitenden Blech (104) anliegt; und/oder
wobei die Lagerplatte (102) eine Glasplatte ist.

13. Temperaturmessanordnung (100) gemäß Anspruch 9, ferner umfassend:
ein wärmeisolierendes Element (108), das auf einer von der Lagerplatte (102) abgewandten Seite des wärmeleitenden Blechs (104) angeordnet ist, wobei das wärmeisolierende Element (108) mit Öffnungen (114) versehen ist, die an die Temperaturfühlerelemente (106) angepasst sind, und zumindest Teile der Temperaturfühlerelemente (106) durch die Öffnungen (114) hindurchgehen, um an der Erfassungsposition (1046) anzuliegen.

14. Kochgerät (200), umfassend:
ein Gehäuse (204); und
eine Temperaturmessanordnung (100) gemäß einem der Ansprüche 1 bis 13.

15. Kochgerät (200) gemäß Anspruch 14, wobei das Gehäuse (204) Folgendes umfasst:
ein unteres Gehäuse (2042); und
eine obere Abdeckung (2044), die abnehmbar mit dem unteren Gehäuse (2042) verbunden ist, wobei die obere Abdeckung (2044) und das untere Gehäuse (2042) verbunden sind, um einen Aufnahmehohlraum auszubilden, ein wärmeleitendes Blech (104) und eine Steuerplatte (112) der Temperaturmessanordnung (100) in dem Aufnahmehohlraum angeordnet sind, und
eine Lagerplatte (102) der Temperaturmessanordnung (100) an der oberen Abdeckung (2044) befestigt ist.

## Revendications

1. Ensemble de mesure de température (100), comprenant :
une plaque d'appui (102), dans lequel un premier côté de la plaque d'appui (102) est pourvu d'une zone d'appui (1022) ;
une feuille thermoconductrice (104) disposée sur un second côté de la plaque d'appui (102), dans lequel la feuille thermoconductrice (104) est fixée à la plaque d'appui (102) ;
**caractérisé en ce que** l'ensemble de mesure de température (100) comprend :
une bobine de chauffage (202) disposée sur un côté de la feuille thermoconductrice (104) à distance de la plaque d'appui (102), dans lequel la bobine de chauffage (202) est pourvue d'une pluralité de rainures de positionnement (2024) ; et
une pluralité d'éléments de détection de température (106) disposés sur le second côté de la plaque d'appui (102), dans lequel une extrémité de chaque élément de détection de température (106) vient en butée contre la feuille thermoconductrice (104) ; dans lequel
la feuille thermoconductrice (104) est pourvue d'une pluralité de colonnes de positionnement (1042) s'étendant dans un sens de l'épaisseur de la plaque d'appui (102), et un ensemble de la feuille thermoconductrice (104) et de la bobine de chauffage (202) est réalisé en adaptant les colonnes de positionnement (1042) et les rainures de positionnement (2022).

2. Ensemble de mesure de température (100) selon la revendication 1, comprenant en outre :
une pluralité de trous de montage (2022) prévus sur la bobine de chauffage (202) ; dans lequel
la pluralité d'éléments de détection de température (106) sont disposés de manière à correspondre aux trous de montage (2022) de la bobine de chauffage (202) ; et/ou l'ensemble de mesure de température (100) comprend en outre :
un boîtier inférieur (2042) disposé sur le second côté de la plaque d'appui (102), dans lequel la bobine de chauffage (202), les éléments de détection de température (106) et la feuille thermoconductrice (104) sont disposés entre le boîtier inférieur (2042) et la plaque d'appui (102), et dans lequel
la bobine de chauffage (202) est disposée sur le boîtier inférieur (2042), et des positions relatives entre les éléments de détection de température (106) et le boîtier inférieur (2042) sont fixées.

3. Ensemble de mesure de température (100) selon la revendication 1 ou 2, comprenant en outre :
un élément d'isolation thermique (108) disposé sur un côté de la feuille thermoconductrice (104) à distance de la plaque d'appui (102), dans lequel l'élément d'isolation thermique (108) est pourvu d'ouvertures (114) adaptées aux éléments de détection de température (106), et au moins une partie des éléments de détection de température (106) passent à travers les ouvertures (114) pour venir en butée contre la feuille thermoconductrice (104).

4. Ensemble de mesure de température (100) selon la revendication 3, dans lequel l'élément d'isolation thermique (108) est pourvu d'une pluralité d'encoches (1082), dans lequel la pluralité d'encoches (1082) correspondant aux rainures de positionnement (2022), les colonnes de positionnement (1042) sont insérées dans les rainures de positionnement (2022) à travers les encoches (1082), et une partie faisant saillie de l'élément d'isolation thermique (108) sur la plaque d'appui (102) recouvre une partie faisant saillie de la feuille thermoconductrice (104) sur la plaque d'appui (102) ; et/ou dans lequel l'élément d'isolation thermique (108) peut être déformé dans le sens de l'épaisseur de la plaque d'appui (102), et une épaisseur de l'élément d'isolation thermique (108) est comprise entre 1 mm et 5 mm.

5. Ensemble de mesure de température (100) selon l'une quelconque des revendications 1 à 4, dans lequel les éléments de détection de température (106) comprennent :
des supports élastiques (1066) en encliquetage avec les trous de montage (2022) de la bobine de chauffage (202), et les supports élastiques (1066) sont pourvus de corps de détection de température venant en butée contre la feuille thermoconductrice (104) ; dans lequel l'ensemble de mesure de température (100) comprend en outre de préférence :
des renflements de limitation (1162) disposés sur des parois périphériques de parties d'extrémité des supports élastiques (1066) ; et
des épaulements de limitation (1164) disposés dans les trous de montage (2022) ; dans lequel
les renflements de limitation (1162) viennent en butée contre les épaulements de limitation (1164), et les éléments de détection de température (106) et les trous de montage (2022) sont assemblés.

6. Ensemble de mesure de température (100) selon l'une quelconque des revendications 1 à 5, dans lequel la pluralité d'éléments de détection de température (106) comprennent :
un premier élément de détection de température (1062) ; et
une pluralité de deuxièmes éléments de détection de température (1064) disposés uniformément autour du premier élément de détection de température (1062) ; et/ou dans lequel la feuille thermoconductrice (104) comprend une pluralité de zones thermoconductrices (1044) disposées de manière circonférentielle, dans lequel chacune des zones thermoconductrices (1044) est pourvue en interne d'une position de détection (1046), et une extrémité de chaque élément de détection de température (106) vient en butée contre la position de détection (1046).

7. Ensemble de mesure de température (100) selon l'une quelconque des revendications précédentes, dans lequel une partie faisant saillie de la bobine de chauffage (202) sur la plaque d'appui (102) forme une première zone ; et
dans lequel
la plaque d'appui (102) est pourvue d'une zone en forme d'anneau (1110), un centre de cercle de la zone en forme d'anneau (1110) est un point central de la première zone, un diamètre intérieur de la zone en forme d'anneau (1110) est 1/6 d'une taille de la première zone dans une première direction radiale, un diamètre extérieur de la zone en forme d'anneau (1110) est 5/6 d'une taille de la première zone dans une deuxième direction radiale, un cercle circonscrit d'une partie faisant saillie de la feuille thermoconductrice (104) sur la plaque d'appui (102) chevauche une partie faisant saillie de la bobine de chauffage (202) sur la plaque d'appui (102), et les parties en chevauchement sont situées dans la zone en forme d'anneau (1110).

8. Ensemble de mesure de température (100) selon la revendication 7, dans lequel la partie faisant saillie de la bobine de chauffage (202) sur la plaque d'appui (102) recouvre le cercle circonscrit de la partie faisant saillie de la feuille thermoconductrice (104) sur la plaque d'appui (102) ; ou
le cercle circonscrit de la partie faisant saillie de la feuille thermoconductrice (104) sur la plaque d'appui (102) recouvre la partie faisant saillie de la bobine de chauffage (202) sur la plaque d'appui (102).

9. Ensemble de mesure de température (100) selon la revendication 7 ou 8, dans lequel la feuille thermoconductrice (104) comprend une pluralité de zones thermoconductrices (1044) disposées de manière circonférentielle, chacune des zones thermoconductrices (1044) est pourvue en interne d'une position de détection (1046) et d'une bande thermoconductrice s'étendant depuis la position de détection (1046) à une périphérie, et une extrémité de chaque élément de détection de température (106) vient en butée contre la position de détection (1046).

10. Ensemble de mesure de température (100) selon la revendication 9, dans lequel la pluralité de zones thermoconductrices (1044) sont espacées uniformément dans une direction circonférentielle, au moins une des zones thermoconductrices (1044) est reliée à deux zones thermoconductrices circonférentiellement adjacentes (1044) par au moins une bande thermoconductrice, et au moins deux des zones thermoconductrices (1044) sont reliées chacune à une zone thermoconductrice circonférentiellement adjacente (1044) par au moins une bande thermoconductrice.

11. Ensemble de mesure de température (100) selon la revendication 10, dans lequel la feuille thermoconductrice (104) est constituée d'un matériau magnétisable, et au moins deux zones thermoconductrices adjacentes (1044) de la pluralité de zones thermoconductrices (1044) ne sont pas reliées l'une à l'autre.

12. Ensemble de mesure de température (100) selon l'une quelconque des revendications 7 à 10, dans lequel un taux de transfert de chaleur d'un matériau de la feuille thermoconductrice (104) est supérieur à un taux de transfert de chaleur d'un matériau de la plaque d'appui (102) ; et/ou dans lequel la pluralité d'éléments de détection de température (106) comprennent :
un premier élément de détection de température (1062) ; et
une pluralité de deuxièmes éléments de détection de température (1064) disposés uniformément autour du premier élément de détection de température (1062), dans lequel une extrémité de chaque deuxième élément de détection de température (1064) vient en butée contre la feuille thermoconductrice (104) ; et/ou
dans lequel la plaque d'appui (102) est une plaque de verre.

13. Ensemble de mesure de température (100) selon la revendication 9, comprenant en outre :
un élément d'isolation thermique (108) disposé sur un côté de la feuille thermoconductrice (104) à distance de la plaque d'appui (102), dans lequel l'élément d'isolation thermique (108) est pourvu d'ouvertures (114) adaptées aux éléments de détection de température (106), et au moins des parties des éléments de détection de température (106) passent à travers les ouvertures (114) pour venir en butée contre la position de détection (1046).

14. Appareil de cuisson (200), comprenant :
un boîtier (204) ; et
un ensemble de mesure de température (100) selon l'une quelconque des revendications 1 à 13.

15. Appareil de cuisson (200) selon la revendication 14, dans lequel le boîtier (204) comprend :
un boîtier inférieur (2042) ; et
un couvercle supérieur (2044) relié de manière détachable au boîtier inférieur (2042), dans lequel le couvercle supérieur (2044) et le boîtier inférieur (2042) sont reliés pour former une cavité de logement, une feuille thermoconductrice (104) et une plaque de commande (112) de l'ensemble de mesure de température (100) sont disposées dans la cavité de logement, et
une plaque d'appui (102) de l'ensemble de mesure de température (100) est fixée au couvercle supérieur (2044).
